# DEMANDE DE BREVET EUROPEEN

(11) **EP 4 145 305 A1**
(43) Date de publication de la demande: **08.03.2023**
(21) Numéro de dépôt: 21306216.9
(22) Date de dépôt: 06.09.2021
(51) Int. Cl.: G06F 16/58, G06F 16/78

(54) **PROCÉDÉ DE RECHERCHE MULTIFACETTE ET MODULAIRE AU SEIN D'UNE COLLECTION DE SÉQUENCES VIDÉO**

(71) Demandeur: Bull SAS, 78340 Les Clayes-sous-Bois (FR)
(72) Inventeur: GINSCA, Alexandru, 92500 RUEIL-MALMAISON (FR); TOURNADRE, Maxime, 92500 RUEIL-MALMAISON (FR)
(74) Mandataire: IPAZ

(57) **Abrégé**

L'invention concerne un procédé (100), mis en œuvre par ordinateur, de recherche dans une collection de séquences vidéo, chaque séquence vidéo comprenant une séquence d'images et au moins un mot, dit étiquette, associé à ladite séquence vidéo et relatif à un contenu de ladite séquence, ledit procédé (100) comprenant les étapes suivantes :
- réception (102) d'une requête de recherche en langage naturel comprenant un ou plusieurs mots,
- décomposition (106), par un module de décomposition individuel et autonome, de ladite requête de recherche une première liste comprenant au moins un mot clef,
- sélection (112), par un module de sélection individuel et autonome, dans ladite collection, de séquences de vidéo avec ledit au moins un mot clef, ladite sélection (112) fournissant une deuxième liste comprenant au moins une séquence vidéo.

Elle concerne également un dispositif et un programme d'ordinateur mettant en œuvre un tel procédé.

## Description

La présente invention concerne un procédé de recherche multifacette et modulaire au sein d'une collection de séquences vidéo. Elle concerne également un programme d'ordinateur et un dispositif mettant en œuvre un tel procédé.

Le domaine de l'invention est de manière générale le domaine du traitement d'images, et plus particulièrement de la recherche au sein d'une collection de séquences vidéos.

### État de la technique

La recherche de personnes, ou d'objets, dans des images ou de vidéos est en plein essor. Par exemple, dans le domaine de la ré-identification de personnes, il est souvent nécessaire de pouvoir détecter une personne et de suivre son trajet dans le temps et dans l'espace. De manière similaire, il peut être utile de suivre le trajet d'un véhicule par exemple dans l'environnement urbain. Cela permet par exemple de suivre, en temps réel ou *a posteriori,* une personne cible pour connaitre son activité, où pour la localiser, par exemple parce que la personne cible est recherchée, ou mise sous surveillance.

Les images ou les séquences vidéos sont fournies, par exemple, par des caméras de surveillance installées dans le milieu urbain ou par des caméras individuelles portées par des utilisateurs. Le déploiement et la multiplication des caméras augmente considérablement la taille et la variété des collections vidéos dans lesquelles les recherches sont effectuées, ce qui rend ces recherches de plus en plus complexe.

En même temps, la recherche dans les images, ou séquences vidéos, est utilisée dans des domaines de plus en plus variés, ce qui complexifie encore plus la recherche dans les collections de séquences vidéo, et nécessite parfois un savoir-faire qui n'est pas à la portée de tous les utilisateurs dans tous les domaines d'applications. De plus, les solutions actuelles de recherche dans des collections de séquences vidéos sont souvent conçues pour telle ou telle type de collection, ou pour telle ou telle type d'application, et ne peuvent pas être utilisées avec d'autres collections ou d'autres applications.

Un but de la présente invention est de remédier à au moins un des inconvénients précités.

Un autre but de l'invention est de proposer une solution de recherche dans une collection de séquences vidéos, dont l'utilisation est simplifiée.

Un autre but de l'invention est de proposer une solution de recherche dans une collection de séquences vidéos, plus modulaire et plus flexible, de sorte qu'elle peut être facilement adaptée en fonction de la collection de séquences vidéos et/ou de l'application concernée(s).

### Exposé de l'invention

L'invention propose d'atteindre au moins l'un des buts précités par un procédé, mis en œuvre par ordinateur, de recherche dans une collection de séquences vidéos, chaque séquence vidéo comprenant une séquence d'images et au moins un mot, dit étiquette, associé à ladite séquence vidéo et relatif à un contenu de ladite séquence vidéo, ledit procédé comprenant les étapes suivantes :
- réception d'une requête de recherche en langage naturel comprenant un ou plusieurs mots,
- décomposition, par un module de décomposition individuel et autonome, de ladite requête de recherche en une première liste comprenant au moins un mot clef,
- sélection, par un module de sélection individuel et autonome, dans ladite collection, de séquences vidéos avec ledit au moins un mot clef, ladite sélection fournissant une deuxième liste comprenant au moins une séquence vidéo.

Le procédé selon l'invention propose de réaliser une recherche dans une séquence vidéo à partir d'une requête en langage naturel. Cette requête est ensuite décomposée en mot(s) clef(s) qui sont ensuite utilisé(s) pour la recherche dans la collection de séquences vidéos. Ainsi, l'invention ne nécessite pas de savoir-faire pour l'identification des mots clefs utilisés pour la recherche de sorte qu'elle peut être utilisée même par des utilisateurs qui ne sont pas aguerris dans la recherche dans une collection de séquences vidéos.

De plus, l'invention propose de déterminer les mots de clefs utilisés pour la recherche de manière automatisée, ce qui permet de déclencher une recherche de manière plus rapide comparée aux solutions connues pour lesquelles l'utilisateur doit formuler une requête de recherche en fonction des mots clefs qu'il doit préalablement identifier.

En outre, dans la présente invention, les étapes de décomposition de la requête en mots clefs et de recherche sont réalisées par des modules indépendants et autonomes. Ainsi, il est possible de changer chacun de ces modules et de l'adapter à telle ou telle application, et/ou à telle ou telle collection de séquences vidéos, individuellement et sans impacter le reste. Par conséquent, la solution proposée par la présente invention est plus modulaire et plus flexible.

Il est à noter que l'invention ne vise pas à proposer une solution spécifique de décomposition en mots clefs d'une requête en langage naturel. En effet, il existe actuellement différentes solutions, connues de l'homme du métier, pour décomposer une requête formulée en langage naturel en mots clefs. Cependant, ces solutions existantes peuvent être plus ou moins adaptées, ou performantes, en fonction des collections de séquences vidéos ou des applications concernées par la recherche. L'invention permet avantageusement de donner la possibilité à l'utilisateur d'utiliser la solution de décomposition la plus adaptée à la collection vidéo concernée et/ou à l'application concernée, de manière individuelle et sans devoir modifier les autres étapes/fonctions de l'invention.

De même, l'invention ne vise pas à proposer une solution spécifique de sélection de séquences vidéos dans une collection de séquences vidéos à partir de mots clefs. Il existe actuellement différentes solutions, connues de l'homme du métier, pour cela. Cependant, les solutions existantes peuvent être plus ou moins adaptées, ou performantes, en fonction des collections de séquences vidéos et/ou des applications concernées par la recherche. L'invention permet avantageusement de donner la possibilité à l'utilisateur d'utiliser la solution de sélection la plus adaptée en fonction de la collection de séquences vidéos et/ou de l'application concernée, de manière individuelle et sans devoir modifier les autres étapes/fonctions de l'invention.

Dans le présent document, une séquence vidéo est considérée comme étant une suite d'au moins une image.

L'au moins étiquette d'une séquence vidéo correspond à l'au moins une étiquette d'au moins une, et en particulier de chacune, des images formant ladite séquence vidéo.

En outre, le traitement d'une séquence vidéo par un modèle d'intelligence artificielle, te que par exemple un réseau de neurones ou un algorithme consiste en un traitement de chaque image de ladite séquence vidéo puis à une agrégation du résultat obtenu pour chaque image, par exemple par addition, moyennage, etc.

De plus, dans la présente demande, une similarité sémantique entre deux mots peut être la métrique Wu-Palmer, ou toute autre métrique déterminée par toute autre technique connue que l'homme du métier peut utiliser sans fournir d'effort excessif.

En outre, une similarité textuelle entre deux mots peut être calculée de manière connue par toute technique connue. De manière classique, chaque mot est entré dans un réseau neuronal fournissant une représentation vectorielle de ce mot, tel que par exemple en utilisant l'une quelconque des techniques Word2Vec, GloVe, WebSOM ou WordNet. La représentation vectorielle est une donnée numérique, en particulier binaire. La distance, respectivement la similarité, entre ces deux mots est calculée en calculant la distance, respectivement la similarité, entre leurs représentations vectorielles. Par exemple, la distance peut être la distance cosinus.

Suivant des modes de réalisation, l'étape de décomposition peut comprendre une étape, dite de tokenization, mise en œuvre par un module indépendant et autonome, réalisant un découpage de la requête en phrase(s), et/ou en mot(s).

Cette étape permet d'isoler au moins un mot clef, ou au moins une phrase, dans la requête en langage naturel. Cette étape permet par exemple d'enlever les mots de liaison ou des mots d'arrêt (« stop word » en anglais) se trouvant dans la requête en langage naturel. Cette étape peut être réalisée en utilisant des techniques connues, telles que par exemple l'utilisation de listes de mots d'arrêt prédéfinis, la décomposition en un arbre syntaxique pour la détection de groupes nominaux ou des algorithmes de détection de mots-clés, tels que RAKE.

Par exemple, si la requête en langage naturel est « Je bois un café seul », cette étape permet de fournir les mots clefs suivants « Je », « bois », « café » et « seul » en supprimant le mot « un ».

Avantageusement, l'étape de décomposition peut comprendre une étape d'enrichissement, mise en œuvre par un module indépendant et autonome, ajoutant, à la première liste, au moins un mot clef additionnel identifié à partir d'au moins un mot clef se trouvant dans ladite requête en langage naturel.

Cette étape peut être réalisée en utilisant par exemple un dictionnaire de synonymes. Ainsi, pour au moins un mot clef, un dictionnaire de synonyme peut être consulté et tous les synonymes de ce mots clefs peuvent être sélectionnés et ajoutés à la première liste. Ce dictionnaire de synonyme peut être spécifique à l'application souhaitée, ce qui permet d'adapter la recherche à cette application.

Alternativement ou en plus, cette étape peut identifier, pour au moins un mot clef se trouvant dans la première liste, un ou plusieurs mots présentant une similarité sémantique supérieure à une valeur seuil prédéterminée, par exemple à partir d'une base de données de mots préalablement constituée. Par exemple, cette étape peut utiliser l'algorithme WuPalmer pour calculer la similarité sémantique entre ledit mot clef et des mots se trouvant dans une base de données de mots préalablement constituée, telle que par exemple la base de données Wordnet.

Alternativement ou en plus, cette étape peut identifier, pour au moins un mot clef se trouvant dans la première liste, un ou plusieurs mots présentant une similarité textuelle supérieure à une valeur seuil prédéterminée, par exemple à partir d'une base de données de mots préalablement constituée, par exemple en utilisant un réseau neuronal préalablement entrainé, en particulier de manière spécifique à une application donnée. Par exemple, cette étape peut utiliser un réseau neuronal préalablement entrainé avec la technique Word Embedding, en particulier avec un jeu de mots d'entrainement spécifique à l'application donnée. Par exemple, lorsque l'application concerne la reconnaissance faciale, le jeu de données d'entrainement peut être constitué de mots relatifs à la description d'un visage tel que la couleur des yeux, la couleur de cheveux, la présence ou l'absence d'une barbe, la longueur des cheveux, etc. Ainsi, le réseau de neurones, entrainé avec des mots spécifiques à cette application, est ensuite utilisé pour calculer la distance, ou la similarité entre un mot clef se trouvant dans la première liste et des mots d'une base de données préalablement définie pour identifier des mots similaires audit mots clefs. Ces mots similaires sont ensuite ajoutés dans la première liste, comme mots clefs additionnels.

Avantageusement, au moins une séquence vidéo peut être sélectionnée lors de l'étape de sélection par similarité textuelle, et/ou par similarité sémantique, entre au moins un mot clef de la première liste et au moins une étiquette de ladite séquence vidéo.

Lors de cette étape chaque mot clef de la première liste est comparé à chaque étiquette de chaque séquence vidéo. Si le mot clef correspond à une étiquette de la séquence vidéo, celle-ci est sélectionnée et ajoutée dans la deuxième liste.

La correspondance entre un mot clef et une étiquette peut être une correspondance à l'identique.

Alternativement, la correspondance entre un mot clef et une étiquette peut être une similarité basée sur une valeur de similarité, ou distance, calculée entre ledit mot clef et ladite étiquette. Cette similarité peut être déterminée en utilisant l'une des techniques décrites plus haut en référence à l'étape d'enrichissement, en utilisant :
- un dictionnaire de synonyme, en particulier spécifique à l'application ;
- un algorithme de calcul de similarité sémantique entre mots, ou
- un réseau de neurones préalablement entrainé, en particulier en utilisant un jeu d'entrainement spécifique à l'application, pour déterminer une similarité textuelle.

Le procédé selon l'invention peut en outre comprendre une étape, mise en œuvre par un module indépendant et autonome, d'ordonnancement des séquences vidéos dans la deuxième liste en fonction d'au moins un score de pertinence calculé en fonction d'une part de l'au moins un mot clef de la première liste et de l'au moins une étiquette de chaque séquence de vidéo.

Cette étape d'ordonnancement a pour objectif de classer les séquences de vidéo de la deuxième liste dans l'ordre de leur pertinence par rapport à la requête de recherche en utilisant le score de pertinence associé à chaque séquence vidéo. Le score de pertinence peut être calculé selon toute technique ou relation prédéterminé, par exemple en fonction de l'application.

Suivant des modes de réalisation, le score de pertinence d'au moins une séquence vidéo peut correspondre à un nombre de mots clefs de la première liste correspondant à l'au moins une étiquette de ladite séquence vidéo. Autrement dit, plus il y a de mots clefs de la première liste qui correspondent aux étiquettes d'une séquence vidéo, plus le score de pertinence de cette séquence vidéo est élevé. Si une première séquence vidéo comporte 10 étiquettes correspondant à des mots de clefs de la première liste, alors le score de pertinence de cette séquence vidéo peut égal à 10, et si une autre séquence vidéo comporte 7 étiquettes correspondant à des mots de clefs de la première liste, alors le score de pertinence de cette séquence vidéo peut égal à 7.

Suivant des modes de réalisation, le score de pertinence d'au moins une séquence vidéo peut correspondre à un score de similarité entre l'au moins un mot clefs de la première liste et l'au moins une étiquette de ladite séquence vidéo. La similarité entre un mot clef et une étiquette peut être déterminée selon l'une des techniques décrites plus haut : similarité textuelle ou similarité sémantique. Pour une séquence vidéo, le score de pertinence peut par exemple correspondre à une somme, ou à une moyenne, des scores de similarité de tous les mots clefs de la première liste avec toutes les étiquettes de ladite séquence vidéo.

Suivant des modes de réalisation, le score de pertinence d'au moins une séquence vidéo peut correspondre à un score donné par un modèle d'intelligence artificielle préalablement entrainé avec un jeu de séquences vidéos correspondant aux mots clefs de la première liste. Dans ce cas, le score de pertinence n'est pas basé sur une similarité entre les mots clefs de la première liste et les étiquettes des séquences vidéo, mais sur le contenu visuel des séquences vidéos.

Dans ce cas, par exemple, une fois la première liste de mots clefs obtenue, une base de données d'images ou de séquences vidéos correspondant à chacun de ces mots clef est constituée. Un réseau de neurones est entrainé et validé avec cette base de données. Ensuite, ce réseau de neurones est utilisé pour calculer un score pour chaque séquence vidéo de la deuxième liste. Ce score est utilisé comme score de pertinence pour cette séquence vidéo.

Comme expliqué plus haut, chaque séquence vidéo peut être traitée image par image par le réseau de neurones. Un score est obtenu pour chaque image formant ladite séquence et un score global peut être obtenu pour la séquence vidéo en fonction des scores des images formant ladite séquence vidéo par exemple par moyennage, addition, ou toute autre relation prédéterminée.

Suivant une caractéristique avantageuse, le procédé selon l'invention, peut en outre comprendre une étape, mise en œuvre par un module indépendant et autonome, de raffinement des séquences vidéos de la deuxième liste en fonction d'au moins un critère prédéfini, ladite étape de raffinement modifiant la deuxième liste de séquences vidéos en éliminant au moins une séquence vidéo de ladite deuxième liste.

Le raffinement peut être réalisé par exemple en fonction d'un score de pertinence, ou par rapport à une donnée temporelle ou une donnée de géolocalisation. Le raffinement permet de réduire le bruit dans la deuxième liste de séquence vidéos.

Par exemple, le raffinement peut consister à supprimer de la deuxième liste toutes les séquences vidéos qui ont un score de pertinence inférieur à une valeur seuil prédéfini, ou les « N » séquences vidéos les moins pertinentes, etc.

Alternativement, ou en plus, le raffinement peut consister à supprimer de la deuxième liste toutes les séquences vidéos qui ont été prises à avant une date, ou dans une zone géographique, donnée.

Suivant des modes de réalisation, le procédé selon l'invention peut en outre comprendre une étape, mise en œuvre par un module indépendant et autonome, de regroupement de séquences vidéos de la deuxième liste, en fonction d'au moins un critère regroupement prédéfini.

Les séquences vidéos peuvent être regroupées par rapport à une donnée temporelle, et/ou une donnée de géolocalisation, permettant de considérer les vidéos sous la forme de groupe et non pas de manière individuelle. Bien entendu ces critères de regroupement sont donnés à titre indicatif seulement, et ne sont nullement limitatifs.

Selon un autre aspect de la même invention, il est proposé un programme d'ordinateur comprenant des instructions exécutables, qui, lorsqu'elles sont exécutées par ordinateur, mette en œuvre les étapes du procédé selon l'invention.

Le programme d'ordinateur peut être programmé en tous langages informatique, tel que par exemple en JAVA, C, C++, Python, etc.

Préférentiellement, le programme d'ordinateur comprend plusieurs modules logiciels fonctionnant de manière indépendante et autonome, couplés les uns aux autres. Ainsi, il est possible de remplacer l'un des modules par un nouveau module, sans impacter le fonctionnement des autres modules, ce qui rend le programme d'ordinateur selon l'invention évolutif, personnalisable, adaptable, et modulaire de manière simple, rapide et à la volée. Cela permet d'adapter le programme d'ordinateur selon l'invention en fonction des applications et des collections de séquences vidéos concernées.

En particulier, le programme d'ordinateur selon l'invention peut comprendre un module logiciel de décomposition de la requête de recherche une première liste comprenant au moins un mot clef : ce module de décomposition prend en entrée la requête en langage naturel, et fournit en sortie une liste de mots clefs.

Le module de décomposition peut lui-même être composé de modules logiciels, couplés les uns aux autres, mais fonctionnant de manière indépendante les uns des autres, à savoir :
- un module, appelé module de conversation, optionnelle, configuré pour convertir une requête en langage naturel, sous forme audio, en une requête en langage naturel textuel. Le module de conversion prend en entrée un signal audio, et fournit en sortie un signal numérique ;
- un module, appelé module de tokenization, configuré pour découper la requête en langage naturel. Le module de tokenization prend en entrée la requête en langage naturel, sous sa forme textuelle, et fournit en sortie la première liste de mots clefs ;
- un module, appelé module d'enrichissement, configuré pour enrichir la première liste de mots clefs. Le module d'enrichissement prend en entrée la première liste de mots clefs, et fournit, en sortie, la première liste de mots clefs enrichie d'au moins un mot clef additionnel.

Le programme d'ordinateur selon l'invention peut comprendre un module logiciel de recherche configuré pour réaliser une recherche de séquences vidéos dans une collection de séquences vidéos : ce module de recherche prend, en entrée, la première liste de mots clefs et fournit, en sortie, une deuxième liste de séquences vidéos.

Le programme d'ordinateur selon l'invention peut comprendre un module logiciel d'ordonnancement configuré pour réaliser un ordonnancement de séquences vidéos : ce module d'ordonnancement prend en entrée la deuxième liste de séquences vidéo, et fournit en sortie une deuxième liste de séquences vidéos ordonnancée.

Le module d'ordonnancement peut lui-même être composé de modules logiciels fonctionnant de manière autonome et indépendante les uns des autres, à savoir :
- au moins un module de calcul de score de pertinence, configuré pour calculer un score de pertinence pour chaque séquence vidéo, et
- un module réalisant un ordonnancement des séquences vidéos de la deuxième liste en fonction de leurs scores de pertinence.

Le programme d'ordinateur selon l'invention peut comprendre un module logiciel de raffinement configuré pour réaliser un raffinement de séquences vidéos : ce module de raffinement prend :
- en entrée, la deuxième liste de séquences vidéo, éventuellement ordonnancée, et au moins un critère de raffinement : et
- fournit, en sortie, une deuxième liste de séquences vidéos raffinée.

Le programme d'ordinateur selon l'invention peut comprendre un module logiciel de regroupement configuré pour réaliser un regroupement de séquences vidéos : ce module de regroupement prend :
- en entrée, la deuxième liste de séquences vidéos, éventuellement ordonnancée et/ou raffinée, et au moins un critère de regroupement ; et
- fournit, en sortie, une deuxième liste de séquences vidéos dans laquelle au moins deux séquences vidéos sont regroupées suivant ledit critère de regroupement.

Selon un autre aspect de la même invention, il est proposé un dispositif informatique pour la recherche de séquences vidéos dans une collection de séquences vidéos, comprenant :
- des moyens configurés pour mettre en œuvre les étapes du procédé selon l'une quelconque des revendications 1 à 8 ; ou
- un programme d'ordinateur selon la revendication précédente.

Le dispositif selon l'invention peut être tout type d'appareil tel qu'un ordinateur, un serveur, etc.

Le dispositif selon l'invention peut être un unique appareil ou un appareil distribué formé par plusieurs dispositifs, se trouvant sur un même site ou sur des sites distants, par exemple au sein d'un environnement de type « cloud ».

Le dispositif selon l'invention peut comprendre, ou non, la collection de séquences vidéos.

Le dispositif selon l'invention peut préférentiellement comprendre une combinaison quelconque d'au moins un module logiciel et/ou d'au moins un module matériel, chacun correspondant à un module logiciel décrit plus haut en référence au programme d'ordinateur et dont la description ne sera pas reprise ici par soucis de concision.

La présente invention peut être utilisée pour faire des recherches dans tout type de collections de séquences vidéos par exemple pour l'identification de personnes ou objets en vue de leur suivi, de leur localisation, pour la reconnaissance, faciale, pour la surveillance, etc. Elle peut également être utilisée pour rechercher de grandes collections de vidéos appartenant à des sociétés de médias ou à des télévisions, afin d'extraire de courts segments de vidéos pertinentes pour leur rediffusion. Elle peut également faire partie d'une application destinée aux utilisateurs finaux, où, étant donné la grande quantité de vidéos générées par les smartphones, elle leur permettrait de retrouver des moments, des personnes ou des objets particuliers dans leurs vidéos.

Le, ou chaque, réseau de neurones auquel il est fait référence dans la présente demande peut par exemple être un réseau de neurones convolutif.

### Description des figures et modes de réalisation

D'autres avantages et caractéristiques apparaîtront à l'examen de la description détaillée de modes de réalisation nullement limitatifs, et des dessins annexés sur lesquels :
- la FIGURE 1 est une représentation schématique d'un exemple de réalisation non limitatif d'un procédé selon l'invention ; et
- la FIGURE 2 est une représentation schématique d'un exemple de réalisation non limitatif d'un dispositif selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

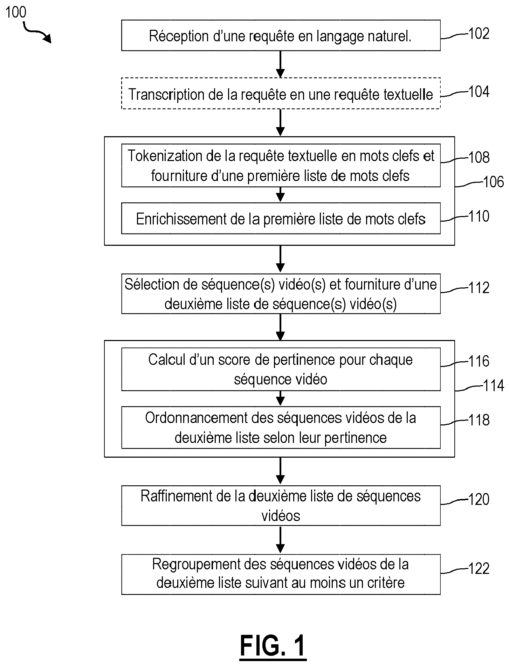

La FIGURE 1 est une représentation schématique d'un exemple de réalisation non limitatif d'un procédé selon l'invention.

Le procédé 100 de la FIGURE 1 peut être utilisé pour faire des recherches dans une collection de séquences vidéos de tout type.

Le procédé 100 comprend une étape 102 de réception d'une requête de recherche en langage naturel. Une telle requête peut par exemple être une requête de type « Je cherche des voitures bleues » formulée par un utilisateur qui souhaite faire une recherche dans la collection de séquences vidéo. La requête peut être formulée sous une forme textuelle, par exemple au travers d'un clavier. Alternativement, la requête peut être formulée sous forme orale.

Lorsque la requête de recherche est formulée oralement, alors le procédé 100 peut comprendre une étape 104, réalisant une transcription de la requête en une requête textuelle, en utilisant un module de transcription classique.

Lors d'une étape 106, le procédé 100 comprend une décomposition de la requête de recherche en mots clefs pour fournir une première liste de mots clefs.

Cette étape 106 comprend une étape 108 de tokenization réalisant un découpage de la requête en mots. Cette étape 108 permet d'isoler au moins un mot clef dans la requête de recherche. Cette étape permet par exemple d'enlever les mots de liaison ou des stop words, se trouvant dans la requête en langage naturel. Cette étape peut être réalisée en utilisant des techniques connues, telles que par exemple NLTK Tokenize. Par exemple, cette étape fournit une première liste de mots clefs comprenant le smots clefs {Voitures ;bleues} à partir de la requête « Je cherche des voitures bleues ».

L'étape 106 comprend en outre une étape 110 d'enrichissement ajoutant, à la première liste fournie par l'étape 108, au moins un mot clef additionnel identifié à partir d'au moins un mot clef se trouvant dans ladite requête en langage naturel.

Cette étape 110 peut être réalisée en utilisant par exemple un dictionnaire de synonymes et en cherchant pour chaque mot clef de la première liste des synonymes. Alternativement ou en plus, cette étape être réalisée par similarité sémantique, par exemple en utilisant la technique connue WuPalmer. Alternativement ou en plus, cette étape peut être réalisée en utilisant un réseau de neurones pour identifier, pour chaque mot clef se trouvant dans la première liste, un ou plusieurs mots ressemblant **textuellement** à ce mot clef, en fonction d'une donnée de distance ou de similarité entre ce mot clef et des mots d'une base de données préalablement constituée, par exemple la base Wordnet.

Ainsi, l'étape 110 fournit une première liste de mots clefs enrichies. Par exemple, cette étape 110 fournit une première liste de mots clefs comprenant {voitures ; *voiture ;véhicule ;automobile* ;bleues ; *bleu ;bleus*} à partir de la liste de mots clefs {voiture ;bleues}.

Lors d'une étape 112, une sélection de séquences vidéos est réalisée dans la collection de séquences vidéos. Cette étape 112 sélectionne toutes les séquences vidéos dont au moins une étiquette correspond à au moins un mot clef de la première liste fournie à l'étape 106. Cette étape 112 fournit une deuxième liste comprenant au moins une séquence vidéo.

La correspondance entre un mot clef et une étiquette peut être une identité/correspondance textuelle.

Alternativement ou en plus, la correspondance entre un mot clef et une étiquette peut être une similarité sémantique, déterminée par exemple en utilisant WuPalmer.

Alternativement ou en plus, la correspondance entre un mot clef et une étiquette peut être une similarité textuelle, déterminée par exemple en utilisant un réseau neuronal préalablement entrainé, de manière classique.

Le procédé 100 comprend en outre une étape 114 d'ordonnancement des séquences vidéos de la deuxième liste en fonction d'un score de pertinence de sorte que les séquences vidéos sont classées par score de pertinence par rapport à la requête de recherche.

Pour ce faire un score de pertinence est calculé lors d'une étape 116. Pour au moins une séquence vidéo, le score de pertinence peut être calculé de différentes manières.

Par exemple, le score de pertinence d'au moins une séquence vidéo peut correspondre au nombre de mots clefs de la première liste correspondant à l'au moins une étiquette de ladite séquence vidéo.

Suivant un autre exemple, le score de pertinence peut correspondre à une similarité sémantique ou textuelle entre les mots clefs de la première liste et les étiquettes de la séquence vidéo. La similarité sémantique, respectivement textuelle, peut être calculée suivant l'une quelconque des techniques décrites plus haut par exemple par WuPalmer, respectivement un réseau neuronal préalablement entrainé pour cette étape.

Suivant un autre exemple de réalisation, le score pertinence peut être un score donné par un modèle d'intelligence artificielle préalablement entrainé avec un jeu de séquences vidéos correspondant aux mots clefs de la première liste. Dans ce cas, le score de pertinence n'est pas basée sur une similarité entre les mots clefs de la première liste et les étiquettes des séquences vidéos, mais sur le contenu visuel des séquences vidéos.

Puis, lors d'une étape 118, les séquences vidéos de la deuxième liste sont ordonnées dans l'ordre de pertinence en fonction de leur score de pertinence.

Le procédé 100 comprend en outre une étape 120 de raffinement des séquences vidéos de la deuxième liste en fonction d'au moins un critère prédéfini.

Le raffinement peut être réalisé par exemple en fonction du score de pertinence calculé à l'étape 116, en éliminant chaque séquence vidéo dont le score de pertinence est inférieur à une valeur seuil préalablement choisie, ou les « N » séquences vidéos les moins pertinentes, etc. Alternativement, ou en plus, le raffinement peut consister à supprimer de la deuxième liste toutes les séquences vidéos qui ont été prises à avant une date donnée, ou dans une zone géographique donnée.

L'étape 120 de raffinement fournit une deuxième liste de séquences vidéos raffinée.

Le procédé 100 comprend en outre une étape 122 de regroupement de séquences vidéos de la deuxième liste, en fonction d'au moins un critère regroupement prédéfini.

Le critère de regroupement peut être une donnée temporelle, par exemple pour regrouper toutes les séquences vidéos prises par date. Le critère de regroupement peut être une donnée de géolocalisation par exemple pour regrouper toutes les séquences vidéos prises par lieu.

L'étape 122 fournit une deuxième liste de séquences vidéos qui est organisée suivant au moins un critère souhaité par l'utilisateur.

Chacune des étapes 104-122 est préférentiellement et avantageusement réalisée par un module, logiciel et/ou matériel, autonome et indépendant des modules réalisant les autres étapes. Ainsi, il est possible de modifier et de remplacer la solution utilisée pour réaliser chacune des étapes sans conséquence pour les autres étapes du procédé.

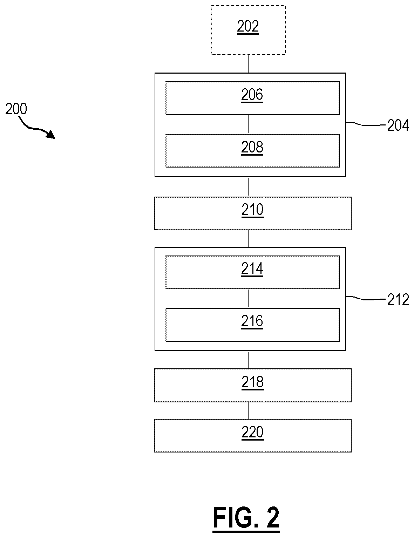

La FIGURE 2 est une représentation schématique d'un exemple de réalisation non limitatif d'un dispositif selon l'invention.

Le dispositif 200 de la FIGURE 2 peut être utilisé pour mettre en œuvre un procédé selon l'invention et en particulier le procédé 100 de la FIGURE 1.

Le dispositif 200 comporte une module, optionnel, 202 pour transcrire une requête de recherche audio en une requête de recherche textuelle. Un tel module est classiquement connu de l'homme du métier, prend en entrée un signal audio énonçant la requête en langage naturel, et fournit en sortie une requête en langage naturel sous forme textuelle.

Le dispositif 200 comprend en outre un module 204 de décomposition de la requête de recherche textuelle en une première liste comprenant au moins un mot clef : ce module de décomposition prend, en entrée, la requête en langage naturel et fournit, en sortie, une liste de mots clefs.

Le module de décomposition 204 comprend :
- un module 206, appelé module de tokenization, configuré pour découper la requête en langage naturel, tel que décrit plus haut en référence à l'étape 108 ; et
- un module 208, appelé module d'enrichissement, configuré pour enrichir la première liste de mots clefs, tel que décrit plus haut en référence à l'étape 110.

Le dispositif 200 comprend un module 210 de recherche configuré pour réaliser une recherche de séquences vidéos dans une collection de séquences vidéos, par exemple tel que décrit plus haut en référence à l'étape 112. Ce module de recherche 210 prend, en entrée, la première liste de mots clefs et fournit, en sortie, une deuxième liste de séquences vidéos.

Le dispositif 200 comprend en outre un module 212 d'ordonnancement configuré pour réaliser un ordonnancement de séquences vidéos, tel que décrit plus haut en référence à l'étape 114. Ce module d'ordonnancement 212 prend, en entrée, la deuxième liste de séquences vidéos et fournit, en sortie, une deuxième liste de séquences vidéos ordonnancée.

Le module d'ordonnancement 212 peut lui-même être composé de modules logiciels autonomes et fonctionnant de manière indépendante les uns des autres, à savoir :
- au moins un module 214 de calcul de score de pertinence, configuré pour calculer un score de pertinence pour chaque séquence de vidéo suivant l'une quelconque des techniques décrites plus haut en référence à l'étape 116, et ;
- un module 216 réalisant un ordonnancement des séquences vidéos en fonction de leurs scores de pertinence.

Le dispositif 200 peut comprendre un module 218 de raffinement configuré pour réaliser un raffinement de séquences vidéos, par exemple tel que décrit en référence à l'étape 120 du procédé 100. Ce module de raffinement 218 prend :
- en entrée, la deuxième liste de séquences vidéo, éventuellement ordonnancée, et au moins un critère de raffinement : et
- fournit, en sortie, une deuxième liste de séquences vidéos raffinée.

Le dispositif 200 peut en outre comprendre un module 220 de regroupement configuré pour réaliser un regroupement de séquences vidéos, par exemple tel que décrit en référence à l'étape 122 du procédé 100 de la FIGURE 1. Ce module de regroupement 220 prend :
- en entrée, la deuxième liste de séquences vidéo, éventuellement ordonnancée et/ou raffinée, et au moins un critère de regroupement ; et
- fournit, en sortie, une deuxième liste de séquences vidéos dans laquelle au moins deux séquences vidéos sont regroupées suivant ledit critère de regroupement.

Bien entendu le dispositif 200 peut comprendre d'autre modules que ceux décrits ici.

L'un au moins des modules peut être un module matériel.

L'un au moins des modules peut être un module logiciel.

En tous cas, chacun des modules 202-220 est un module indépendant et autonome de sorte qu'il peut être remplacé sans conséquence pour les autres modules du dispositif.

L'invention porte également sur un programme d'ordinateur comprenant, sous forme logicielle, chacun des modules 202-220 du dispositif 200 de la FIGURE 2.

Bien entendu l'invention n'est pas limitée aux exemples qui viennent d'être décrits.

## Revendications

1. Procédé (100), mis en œuvre par ordinateur, de recherche dans une collection de séquences vidéos, chaque séquence vidéo comprenant une séquence d'images et au moins un mot, dit étiquette, associé à ladite séquence vidéo et relatif à un contenu de ladite séquence vidéo, ledit procédé (100) comprenant les étapes suivantes :
- réception (102) d'une requête de recherche en langage naturel comprenant un ou plusieurs mots,
- décomposition (106), par un module (204) de décomposition individuel et autonome, de ladite requête de recherche en une première liste comprenant au moins un mot clef,
- sélection (112), par un module (210) de sélection individuel et autonome, dans ladite collection, de séquences vidéos avec ledit au moins un mot clef, ladite sélection (112) fournissant une deuxième liste comprenant au moins une séquence vidéo.

2. Procédé (100) selon la revendication précédente, **caractérisé en ce que** l'étape de décomposition (106) comprend une étape (108), dite de tokenization, mise en œuvre par un module (206) indépendant et autonome, réalisant un découpage de la requête en phrase(s), et/ou en mot(s).

3. Procédé (100) selon l'une quelconque des revendications précédentes, **caractérisé en ce que** l'étape de décomposition (106) comprend une étape (110) d'enrichissement, mise en œuvre par un module (208) indépendant et autonome, ajoutant, à la première liste, au moins un mot clef additionnel identifié à partir d'au moins un mot clef se trouvant dans ladite requête en langage naturel.

4. Procédé (100) selon l'une quelconque des revendications précédentes, **caractérisé en ce qu'**au moins une séquence vidéo est sélectionnée lors de l'étape de sélection (112) par similarité textuelle, et/ou par similarité sémantique, entre au moins un mot clef de la première liste et au moins une étiquette de ladite séquence vidéo.

5. Procédé (100) selon l'une quelconque des revendications précédentes, **caractérisé en ce qu'**il comprend en outre une étape (118), mise en œuvre par un module (210) indépendant et autonome, d'ordonnancement des séquences vidéos dans la deuxième liste en fonction d'au moins un score de pertinence calculé en fonction d'une part de l'au moins un mot clef de la première liste et de l'au moins une étiquette de chaque séquence de vidéo.

6. Procédé (100) selon la revendication précédente, **caractérisé en ce que** le score de pertinence d'au moins une séquence vidéo correspond à :
- un nombre mots clefs de la première liste correspondant à l'au moins une étiquette de ladite séquence vidéo ;
- un score de similarité entre l'au moins un mot clefs de la première liste et l'au moins une étiquette de ladite séquence vidéo ; ou
- un score donné par un modèle d'intelligence artificielle préalablement entrainé avec un jeu de séquences vidéos correspondant aux mots clefs de la première liste.

7. Procédé (100) selon l'une quelconque des revendications précédentes, **caractérisé en ce qu'**il comprend en outre une étape (120), mise en œuvre par un module (218) indépendant et autonome, de raffinement des séquences vidéos de la deuxième liste en fonction d'au moins un critère prédéfini, ladite étape de raffinement (120) modifiant la deuxième liste de séquences vidéos en éliminant au moins une séquence vidéo de ladite deuxième liste.

8. Procédé (100) selon l'une quelconque des revendications précédentes, **caractérisé en ce qu'**il comprend en outre une étape (122), mise en œuvre par un module (220) indépendant et autonome, de regroupement de séquences vidéos de la deuxième liste, en fonction d'au moins un critère regroupement prédéfini.

9. Programme d'ordinateur comprenant des instructions exécutables, qui, lorsqu'elles sont exécutées par ordinateur, mette en œuvre les étapes du procédé (100) selon l'une quelconque des revendications précédentes.

10. Dispositif informatique (200) pour la recherche de séquences vidéos dans une collection de séquences vidéos, comprenant :
- des moyens configurés pour mettre en œuvre les étapes du procédé (100) selon l'une quelconque des revendications 1 à 8 ; ou
- un programme d'ordinateur selon la revendication précédente.
